# EUROPEAN PATENT SPECIFICATION

(11) **EP 3 139 800 B1**
(45) Date of publication and mention of the grant of the patent: **23.10.2019**
(21) Application number: 15788620.1
(22) Date of filing: 05.05.2015
(51) Int. Cl.: A47J 31/60, A47J 31/34, A47J 31/44, B65D 85/804, A47J 31/36

(54) **CLEANING DEVICE AND METHOD**
REINIGUNGSVORRICHTUNG UND -VERFAHREN
DISPOSITIF ET PROCÉDÉ DE NETTOYAGE

(30) Priority: 05.05.2014 AU 2014901640; 24.09.2014 AU 2014903817
(43) Date of publication of application: 15.03.2017
(73) Proprietor: Cafetto Asia Pte. Ltd., 048624 Singapore (SG)
(72) Inventor: WHITTAKER, Andrew William, Henley Beach, S.A. 5022 (AU); SHORT, Christopher, Brompton, S.A. 5007 (AU)
(74) Representative: Foot, Paul Matthew James
(86) International application number: PCT/IB2015/000878
(87) International publication number: WO 2015/170174

(56) References cited:
- EP-A1- 2 604 547
- EP-A1- 2 604 547
- WO-A1-2013/166615
- WO-A1-2013/182299
- WO-A1-2013/182299
- WO-A2-2013/188246
- WO-A2-2013/188246
- DE-A1- 2 500 694

## Description

### PRIORITY DOCUMENTS

The present application claims priority from:
Australian Provisional Patent Application No. 2014901640 titled "CLEANING DEVICE AND METHOD" and filed on 5 May 2014; and
Australian Provisional Patent Application No. 2014903817 titled "CLEANING DEVICE AND METHOD" and filed on 24 September 2014.

### TECHNICAL FIELD

The present disclosure relates to the cleaning of beverage dispensing equipment. In a particular form, the present disclosure relates to the cleaning of automated capsule based beverage equipment.

### BACKGROUND

Automated capsule or pod based beverage systems have become popular due to their ease of use and convenience. Principally, these beverage systems are directed to providing coffee based beverages and include a brewing chamber which is sized and shaped to receive a similarly sized and shaped capsule or pod containing the beverage in powder or otherwise concentrated form.

Once the capsule has been placed or inserted into the brewing chamber, the chamber is sealed and water of appropriate temperature and pressure is then injected into the capsule, typically by one or more inlet nozzles that pierce the capsule on closing the brewing chamber. The injected water at pressure then mixes with the concentrated beverage to form a mixed beverage. In addition to the inlet nozzles piercing the capsule, one or more outlet nozzles are similarly configured to pierce the capsule on closing the brewing chamber. Due to the pressure within the capsule, the mixed beverage will be forced out of the one or more outlet nozzles which then supply the resulting beverage to a receiving vessel such as a cup.

In the case of coffee, capsule based beverage systems of this type allow the inexperienced or unskilled person to make a wide range of different types of coffee by simply selecting a different capsule. As an example, an espresso can be made by selecting the espresso capsule or pod and the appropriate amount of water, while a flavoured coffee may be made by selecting the relevant flavoured capsule or pod. In other examples, these capsule based beverage systems may be employed to provide tea based drinks, chocolate or chai based beverages or even soups and the like.

While any beverage dispensing system will require cleaning from time to time, the flexibility of capsule based beverage dispensing systems in providing different types of drinks makes it even more important that cleaning of the outlet nozzle(s) and the brewing chamber be carried out regularly especially between the dispensing of different types of drinks so that contamination does not occur.

Manual cleaning of the outlet arrangement is extremely time consuming. One attempt to address this cleaning issue has been to use capsules that themselves contain cleaning material instead of concentrated beverage. The capsule is then put through a normal beverage dispensing cycle causing a cleaning solution to be ejected through the outlet arrangement. However, these capsule based cleaners suffer from a number of disadvantages including that they do not clean the brewing chamber. This cleaning of the brewing chamber may especially be required when "reusable" cartridges are used with capsule based beverage systems. Furthermore, "cleaning" capsules may be confused with actual beverage capsules which can present a significant safety issue and in addition the cleaning capsules are not themselves reusable.

There is therefore a need to provide a means for cleaning capsule based beverage systems capable of addressing one or more of the disadvantages of current cleaning methods and/or provide a useful alternative for consumers.

WO 2013/188246 discloses a system and method for cleaning a brewing machine.

### SUMMARY

In a first aspect, the present disclosure provides a cleaning device for cleaning a capsule based beverage system, the capsule based beverage system including a brewing chamber having a predetermined size and shape for receiving a beverage capsule, the brewing chamber including an inlet arrangement operable to introduce water at pressure into the beverage capsule received in the chamber and an outlet arrangement to deliver beverage from the beverage capsule, the cleaning device comprising an open ended body portion configured to be located in the brewing chamber, the body portion including a cleaning material holding portion, the cleaning material holding portion configured to hold the cleaning material in a fixed relationship with respect to the body portion, wherein the body portion is configured to allow water under pressure originating from the inlet arrangement to flow through the body portion and to interact with the cleaning material to create a cleaning solution to clean the brewing chamber and outlet arrangement.

In another form, the body portion includes an insert portion and a locating portion, the insert portion extending into the brewing chamber and the locating portion configured to engage with the brewing chamber to prevent movement of the body portion when water under pressure interacts with the cleaning material.

In another form, the insert portion generally conforms to or with the shape of the brewing chamber.

In another form, the cleaning material holding portion is configured to allow reloading of the cleaning material holding portion after use.

In another form, the cleaning material holding portion is a tablet holding region in fluid communication with the body portion, the tablet holding region adapted to receive the cleaning material in tablet form.

In another form, the body portion is configured to allow water under pressure originating from the inlet arrangement to flow through to the tablet holding region to dissolve the tablet to create the cleaning solution.

In another form, the water flows through the body portion and through to the tablet holding portion as a result of one or more apertures located between the body portion and the tablet holding portion.

In another form, the tablet holding region is located generally internally of the body portion.

In another form, the tablet holding region is located generally externally of the body portion.

In another form, the tablet holding region is configured to hold the tablet by press fitting the tablet into the tablet holding region.

In another form, the cleaning material holding portion is a capsule holding region adapted to receive the cleaning material in capsule form.

In another form, the capsule holding region is configured to hold the capsule by press fitting the capsule into the capsule holding region.

In another form, the capsule holding region is located generally internally of the body portion.

In another form, the capsule holding region is located generally externally of the body portion.

In another form, the body portion and the cleaning material holding portion are integrally formed in a unitary moulding.

In a second aspect, the present disclosure provides a cleaning device for cleaning a capsule based beverage system, the capsule based beverage system including a brewing chamber having a predetermined size and shape for receiving a beverage capsule, the brewing chamber including an inlet arrangement operable to introduce water at pressure into the beverage capsule received in the chamber and an outlet arrangement to deliver beverage from the beverage capsule, the cleaning device comprising an open ended body portion configured to be located in the brewing chamber, the body portion including a tablet holding region in fluid communication with the body portion, the tablet holding region configured to hold a cleaning tablet in a fixed relationship with respect to the body portion, wherein the body portion is configured to allow water under pressure originating from the inlet arrangement to flow through the body portion and through to the tablet holding region to dissolve the tablet to create a cleaning solution to clean the brewing chamber and outlet arrangement.

In a third aspect, the present disclosure provides a method for cleaning a capsule based beverage system, the capsule based beverage system including a brewing chamber having a predetermined size and shape for receiving a beverage capsule, the brewing chamber including an inlet arrangement operable to introduce water at pressure into the beverage capsule received in the chamber and an outlet arrangement to deliver beverage from the beverage capsule, the method including:
inserting a cleaning device configured to be received into the brewing chamber, the cleaning device comprising an open-ended body that holds the cleaning material in a fixed relationship with respect to the body;
operating the beverage system to cause water at pressure to enter the brewing chamber by the inlet arrangement to form a cleaning solution; and
operating the beverage system to cause the cleaning solution to be forced out of the outlet arrangement.

In another form, the cleaning device is reusable and the method further includes reloading cleaning material into the cleaning device before inserting the cleaning device into the brewing chamber.

In another form, the cleaning material is in tablet form and reloading includes press fitting the tablet into a tablet holding region of the cleaning device.

In another form, the method further includes flushing the beverage system by operating the beverage system again following the initial operating of the beverage system to cause the cleaning solution to be forced out of the outlet arrangement prior to preparing a beverage.

In a fourth aspect, the present disclosure provides a tablet for a cleaning device for cleaning a capsule based beverage system, the tablet sized and shaped to be received into a complementary sized and shaped tablet holding region of the cleaning device.

In another form, the tablet has a quatrefoil configuration.

In another form, the tablet has a trefoil configuration.

In another form, the tablet is sized and shaped to be press fitted into the tablet holding region of the cleaning device.

In a fifth aspect, the present disclosure provides a cleaning device for cleaning a capsule based beverage system, the cleaning device comprising an unitary open-ended body portion sized and shaped to be received in a brewing chamber of the beverage system, the body portion including a tablet holding region for holding material in tablet form in a fixed relationship with respect to the body portion and a plurality of fluid flow channels to allow fluid to flow through the body portion.

### BRIEF DESCRIPTION OF DRAWINGS

Embodiments of the present disclosure will be discussed with reference to the accompanying drawings wherein:
Figure 1 is a perspective view of a cleaning device for a Caffitaly™ capsule beverage system in accordance with an illustrative embodiment;
Figure 2 is a top view of the cleaning device illustrated in Figure 1;
Figure 3 is a side view of the cleaning device illustrated in Figure 1;
Figure 4 is a bottom view of the cleaning device illustrated in Figure 1;
Figure 5 is a perspective view of the cleaning device illustrated in Figure 1 loaded with a tablet;
Figure 6 is a bottom view of the loaded cleaning device illustrated in Figure 5;
Figure 7 is a perspective view of a cleaning device for a Caffitaly™ capsule beverage system in accordance with another illustrative embodiment;
Figure 8 shows the cleaning device illustrated in Figure 7 loaded with a tablet;
Figure 9 is a perspective view of a cleaning device for a Nespresso™ capsule based beverage system in accordance with an illustrative embodiment;
Figure 10 is a top view of the cleaning device illustrated in Figure 9;
Figure 11 is a side view of the cleaning device illustrated in Figure 9;
Figure 12 is a bottom view of the cleaning device illustrated in Figure 9;
Figure 13 is a perspective view of the cleaning device illustrated in Figure 9 loaded with a tablet;
Figure 14 is a side view of the loaded cleaning device illustrated in Figure 13;
Figure 15 is a perspective view of a loaded cleaning device for a Nespresso™ capsule based beverage system in accordance with a further illustrative embodiment;
Figure 16 is a perspective view of a loaded cleaning device for a Nespresso™ capsule based beverage system in accordance with another illustrative embodiment;
Figure 17 is a perspective view of a cleaning device for a Caffitaly™ or K-Fee™ capsule based beverage system in accordance with yet another illustrative embodiment;
Figure 18 is top view of the cleaning device illustrated in Figure 17;
Figure 19 is a bottom view of the cleaning device illustrated in Figure 18;
Figure 20 is perspective view of the cleaning device illustrated in Figure 17 loaded with a tablet;
Figure 21 is a perspective view of a cleaning device for a Caffitaly™ capsule based beverage system in accordance with a further illustrative embodiment;
Figure 22 is top view of the cleaning device illustrated in Figure 21;
Figure 23 is a side view of the cleaning device illustrated in Figure 21;
Figure 24 is a bottom view of the cleaning device illustrated in Figure 21;
Figure 25 is a perspective view of the cleaning device illustrated in Figure 21 loaded with a quatrefoil shaped tablet;
Figure 26 is a perspective view of a trefoil shaped tablet for use with a cleaning device in accordance with a further illustrative embodiment;
Figure 27 is a top perspective view of a cleaning device for a Nespresso™ capsule beverage system in accordance with an illustrative embodiment;
Figure 28 is a bottom view of the cleaning device illustrated in Figure 27;
Figure 29 is a side view of the cleaning device illustrated in Figure 27;
Figure 30 is a top view of the cleaning device illustrated in Figure 27;
Figure 31 is a bottom perspective view of the cleaning device illustrated in Figure 27;
Figures 32A to 32F are bottom perspective views of cleaning devices for Caffitaly™, Keurig™, K-Fee™, Lavazza a Modo Mio™, Nespresso Professional™ and Espressotoria™ capsule based beverage systems respectively according to illustrative embodiments;
Figure 33 is a perspective view of a cleaning device for a Nespresso™ capsule based beverage system in accordance with another illustrative embodiment; and
Figure 34 is a perspective view of the cleaning device illustrated in Figure 33 loaded with a quatrefoil tablet.

In the following description, like reference characters designate like or corresponding parts throughout the figures.

### DESCRIPTION OF EMBODIMENTS

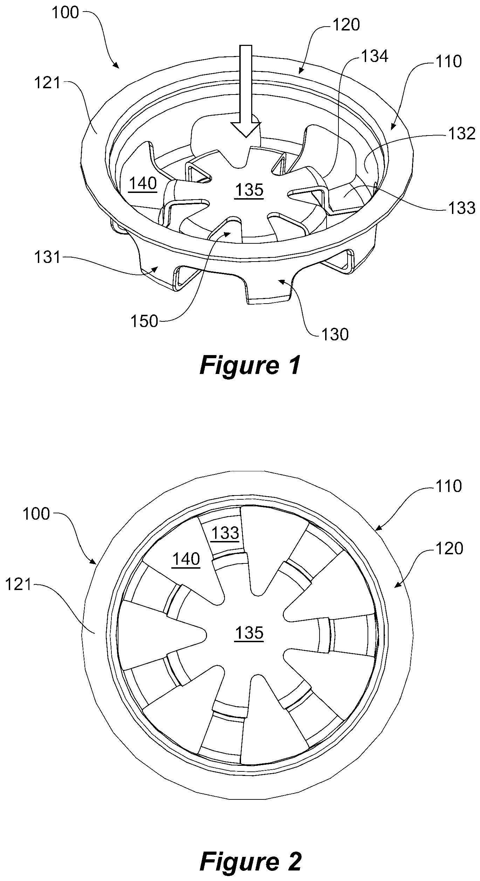

Referring now to Figures 1 to 4, there are shown various views of a cleaning device 100 for cleaning a capsule based beverage system in accordance with an illustrative embodiment. In this illustrative embodiment, cleaning device 100 is for cleaning the brewing chamber and outlet arrangement of a Caffitaly™ capsule or pod system such as models, including but not limited to, S01HS, S03, S04, S05, S06HS and S14 and variants produced for private labels such as for the American coffee chain Coffee Bean and Tea Leaf. Cleaning device 100 includes a generally circularly shaped open-ended body portion 110 that is configured to be located in the brewing chamber in the same sense that a capsule based beverage capsule would locate in the brewing chamber for making a beverage and a cleaning material holding portion 150 configured to accept and hold cleaning material. This embodiment is also suitable for K-Fee™ capsule based beverage system such as models including, but not limited to, 580, 583 and 585.

In this illustrative embodiment, body portion 110 includes a locating portion 120 that engages with the brewing chamber of the beverage system to prevent movement of body portion 110 during the cleaning process. In this embodiment, locating portion 120 is formed as circular rim or lip 121 extending around the open-end of body portion 110 that seats or locates against the opening of the brewing chamber in a similar manner as the rim of the corresponding beverage capsule would. Body portion 110 further includes an insert portion 130 that extends into the brewing chamber and which generally conforms with the shape of the brewing chamber that it extends into.

In this illustrative embodiment, insert portion 130 is formed of regularly spaced rib members 131 each extending in use into the brewing chamber from the lip 121 of body portion 110 to form a wall portion 132 and then radially inwardly to form a strut portion 133 and then upwardly to form an opposing wall portion 134 and then inwardly again to meet in a raised central region 135 to form together on the reverse side a cleaning material holding portion 150 in the form of a circular shaped recess or depression in which a tablet 200 consisting of cleaning material may be loaded to load cleaning device by press fitting tablet 200 into.

In this manner, the body portion 110 is formed generally as a spoke and hub structure having a number of equiangular spaced radial fluid flow channels 140 formed around the ribs and struts (ie the spokes) of insert portion 110 and the tablet receiving region 150 (ie the hub) through which water under pressure may flow in order to dissolve the tablet 200. In this illustrative embodiment, tablet 200 is circularly shaped and formed from relevant materials such as one or more of alkaline builders, ionic surfactants, sequestrants, tablet binders and disintegrants as required. In other embodiments, the cleaning material may be formed as a water soluble capsule incorporating cleaning materials contained in a gel-like film. In these embodiments, the cleaning material holding region would be a capsule holding region having a complementary size and shape to receive the cleaning material in capsule form.

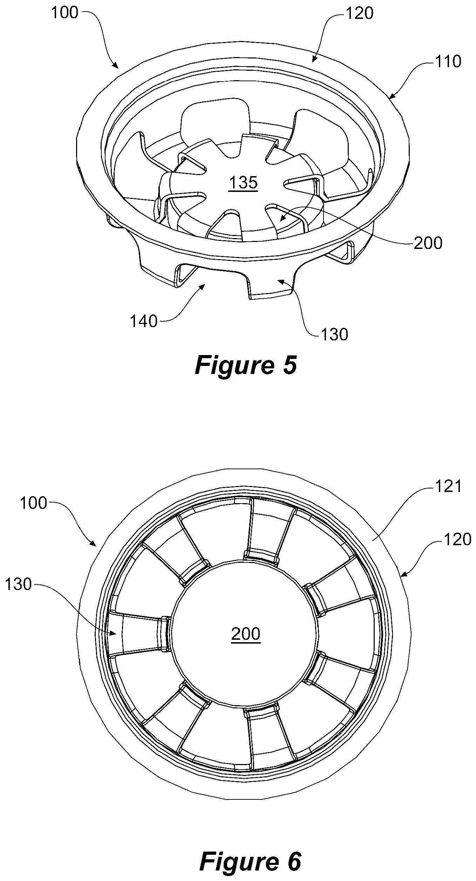

In operation, in order to clean a capsule based beverage system, a user would first load cleaning device 100 by, in this example, inserting and press fitting a tablet 200 into the cleaning material holding portion 150 of the cleaning device 100 as shown in Figures 5 and 6. Following loading of the cleaning device 100, it may then be inserted in the brewing chamber as per a standard capsule. The brewing chamber is then sealed in accordance with the standard operating procedure of the beverage dispenser and the beverage dispenser is operated to fill the brewing chamber with hot water under pressure via the inlet arrangement of the beverage dispenser. This hot water, delivered at typical temperatures of 90°C - 95°C and pressures ranging from 15 bar - 19 bar, then interacts with and dissolves the tablet to create a cleaning solution which is then forced out of the outlet arrangement at pressure in the process cleaning the brewing chamber and outlet arrangement. The cleaning device may then be removed from the brewing chamber similarly to an equivalent used beverage capsule. Optionally, a user may elect to additionally flush the brewing chamber by operating the beverage dispenser without a capsule before preparing a beverage.

As would be appreciated, the cleaning device provides an improved method of cleaning both the brewing chamber and the outlet arrangement of the beverage dispenser by holding the cleaning material (in this case a tablet) in a fixed location so as to allow the brewing chamber to substantially fill the brewing chamber and dissolve the tablet and thereby form a cleaning solution which cleans the brewing chamber and the outlet arrangement as heated water is forced out of the beverage dispenser. The cleaning device may then be re-used as required by simply reloading cleaning device 100 by in this case press fitting a tablet into the cleaning device as described above.

In other embodiments, the cleaning device would be purchased or provided preloaded. In other embodiments, the cleaning device would be disposable and incorporate the cleaning material either attached to, or forming part of the body, in a single use form.

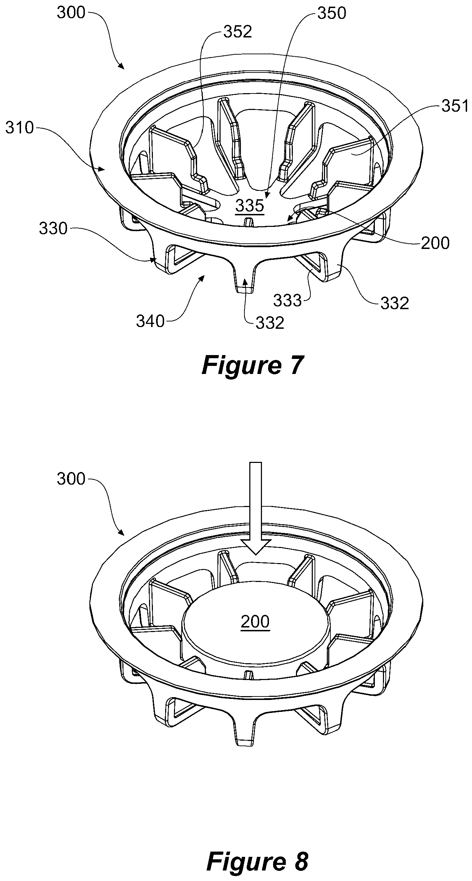

Referring now to Figure 7, there is shown a cleaning device 300 according to a second illustrative embodiment configured again for a Caffitaly™ capsule or pod system. In this illustrative embodiment, cleaning material holding portion 350 is located internally within the body portion 310 as opposed to cleaning device 100 where the tablet holding region is located generally externally to the body portion 110. Similar to cleaning device 100, and as shown in Figure 8, cleaning device 300 is loaded by press fitting a tablet 200 into cleaning material holding portion or tablet holding region 350.

Similar to cleaning device 100, the insert portion 330 is formed of a plurality of spaced apart rib members 331 that extend downwardly as a wall portion 332 and radially inwardly as support strut portions 333 to join in central region 335 to form a spoke and hub structure providing a plurality of equiangular spaced radial fluid flow channels 340. The tablet holding region 350 internal to body portion 310 is formed by a plurality of radially extending fan elements 351 extending upwardly from strut portions 333 whose inner edge 352 is configured to allow a tablet 200 to be press fitted into tablet holding region 350 as best seen in Figure 8.

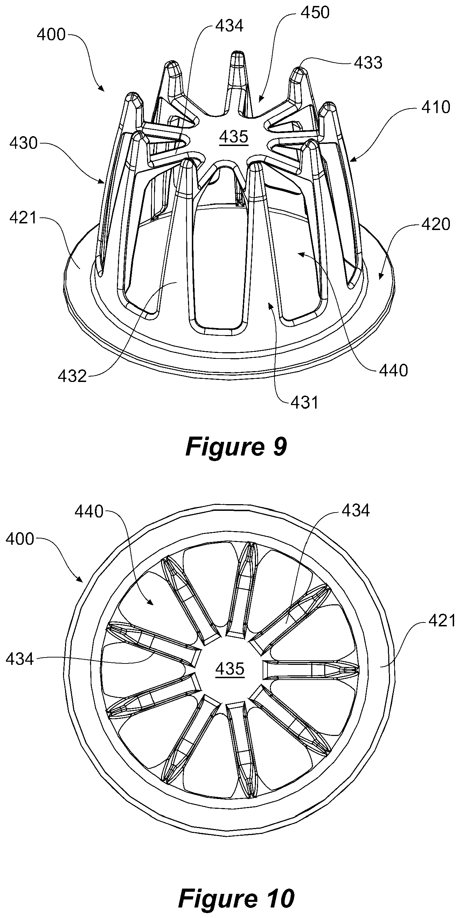

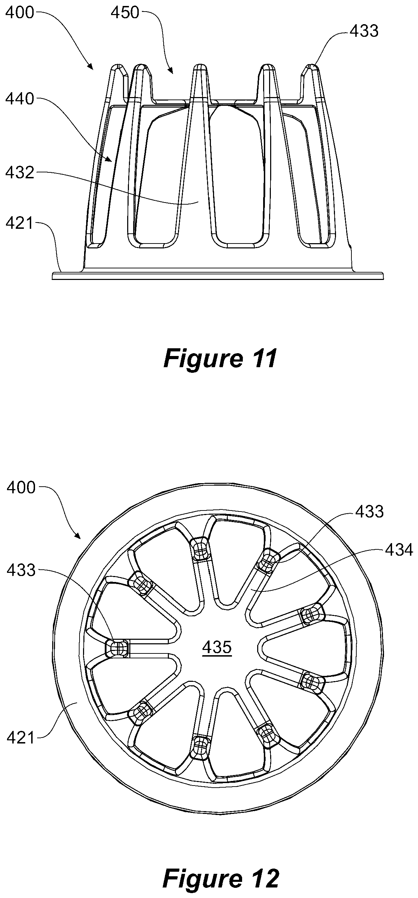

Referring now to Figures 9 to 12, there are shown various views of a cleaning device 400 in accordance with another illustrative embodiment configured to clean the brewing chamber and outlet arrangement of a Nespresso™, DeLonghi™ and Breville™ capsule or pod systems, including but not limited to, Pixie, Lattissima, Essenza, Maestria, CitiZ and Le Cube machines. Cleaning device 400 includes a body portion 410 that is configured to be located in the brewing chamber in the same sense as a beverage capsule locates in the brewing chamber for making a beverage and a cleaning material holding portion 450 configured to accept cleaning material.

Body portion 410 includes a locating portion 420 to engage with the brewing chamber of the beverage system to prevent movement of the body portion 410 during the cleaning process. In this embodiment, locating portion 420 is formed as circular rim or lip 421 that seats or locates against the opening of the brewing chamber in a similar manner as the rim of the corresponding beverage capsule.

Body portion 410 further includes an insert portion 430 that extends into and generally conforms to the shape of the brewing chamber. In this illustrative embodiment, and with reference to the orientation depicted in Figure 9, insert portion is formed of regularly spaced rib members 431 each extending in use into the brewing chamber from the lip 421 of body portion 410 to form a wall portion 432 and then inwardly part way up wall portion 432 to form both a terminating finger portion 433 and a strut portion 434 that extends inwardly to meet in a central region 435 forming in this orientation a crown type structure.

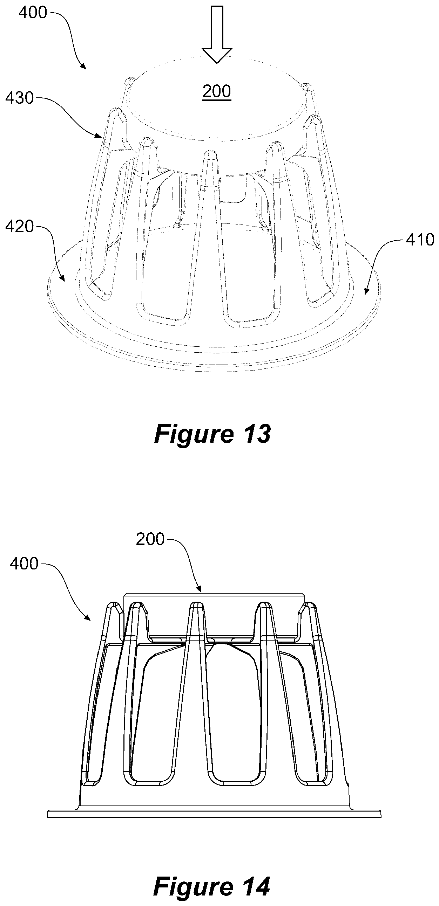

Respective finger portions 433, strut portions 434 and the central region 435 form together a cleaning material holding portion 450 in the form of a circular shaped recess that forms a tablet holding region 450 in which a tablet 200 consisting of cleaning material may be press fitted into as best shown in Figures 13 and 14. In this manner, the insert portion 410 is formed generally as a cage structure having a number of fluid flow channels 440 around the tablet holding region 450 through which water under pressure may flow in order to dissolve tablet 200.

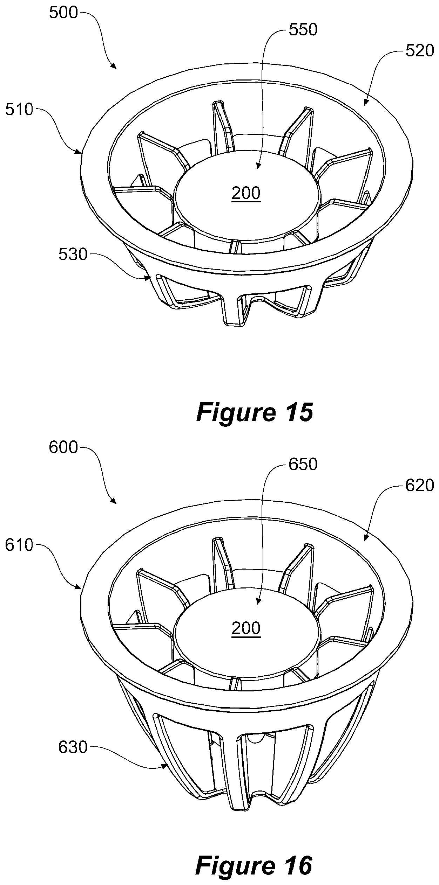

Referring now to Figure 15, there is shown a cleaning device 500 again configured for a Nespresso™ capsule or pod system according to another illustrative embodiment. In this illustrative embodiment, cleaning material holding portion 550 (shown with tablet 200) is formed internally to open ended body portion 510 consisting of locating portion 520 and insert portion 530. The cleaning device 600 depicted in Figure 16 is similar to cleaning device 500 depicted in Figure 15 except that the overall length of the insert portion 630 of body portion 610 is longer than that of insert portion 530 of body portion 510 of cleaning device 500.

While in the above-described embodiments, the cleaning device is formed as a unitary moulding of a suitable food grade plastic such as polypropylene or low density polyethylene, in other embodiments a cleaning device may be formed of a more flexible material such as silicone rubber or the like which may be suitable for more frequent use such as in a hospitality setting.

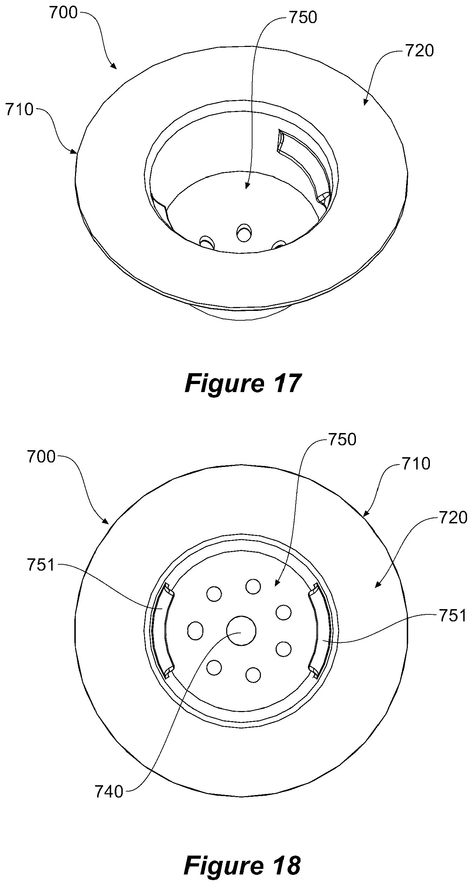

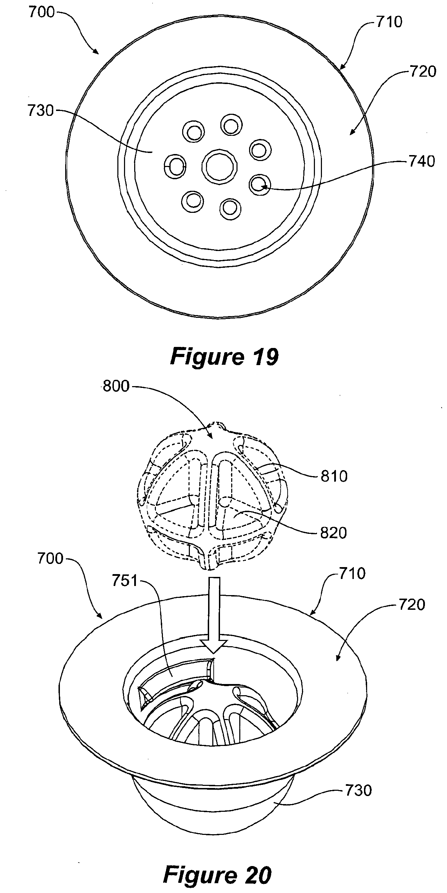

Referring now to Figures 17 to 20, there are shown various views of a cleaning device 700 for Caffitaly™ or K-Fee™ capsule based beverage systems. Cleaning device 700 includes an open ended body portion 710 including a locating portion 720 and an insert portion 730 which is configured as hemispherical shell and incorporates the cleaning material holding portion 750. Located on the inner surface of insert portion are two opposed part-circular retaining nibs 751 which extend inwardly from the inner surface and function to flex outwardly on insertion of tablet 800 into the cleaning material holding portion 750 and then retain tablet 800 once it has been received as best shown in Figure 20. Insert portion 730 includes a plurality of apertures or openings 740 located at its base that function as fluid flow channels to allow heated water to flow through body portion 710 to dissolve tablet 800.

Tablet 800 in this embodiment is of a generally spherical shape which has been adapted to increase its surface area by forming 12 regularly spaced scalloped portions 820 on both hemispheres forming interposed rib regions 810. As would be appreciated, tablet 800 has been sized and shaped to be received into cleaning material holding portion 750 which is of a complementary hemispherical size and shape.

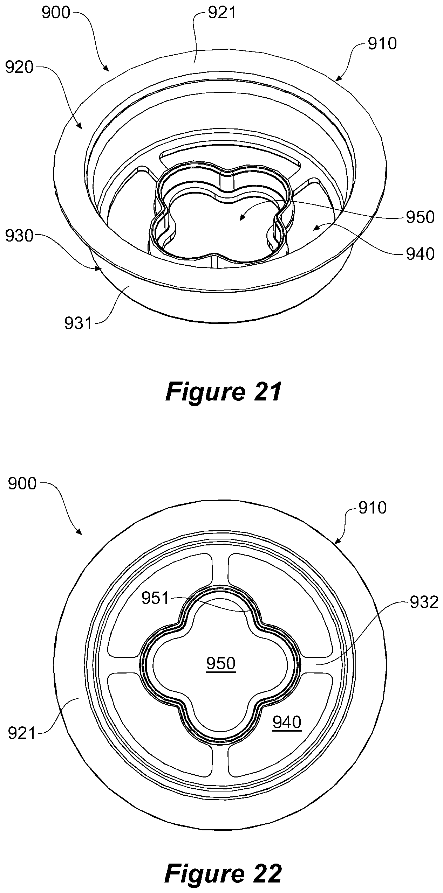

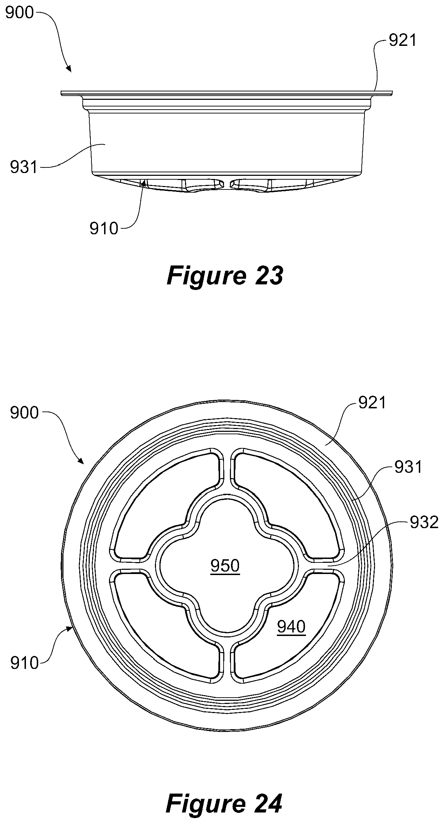

Referring now to Figures 21 to 24, there are shown various views of a cleaning device 900 in accordance with another illustrative embodiment configured to clean the brewing chamber and outlet arrangement of a Caffitaly™ or K-Fee™ capsule or pod system. Cleaning device 900 is formed as a generally circularly shaped open-ended body portion 910 having a locating portion 920 formed as a rim or lip 921 and an insert portion 930 having a cylindrical wall 931. Extending inwardly from the bottom edge of wall 931 are four right angled strut portions 932 that support a cleaning material holding portion 950. The region between individual strut portions 932 functions to form fluid flow channels 940 that allow fluid to flow through cleaning device 900.

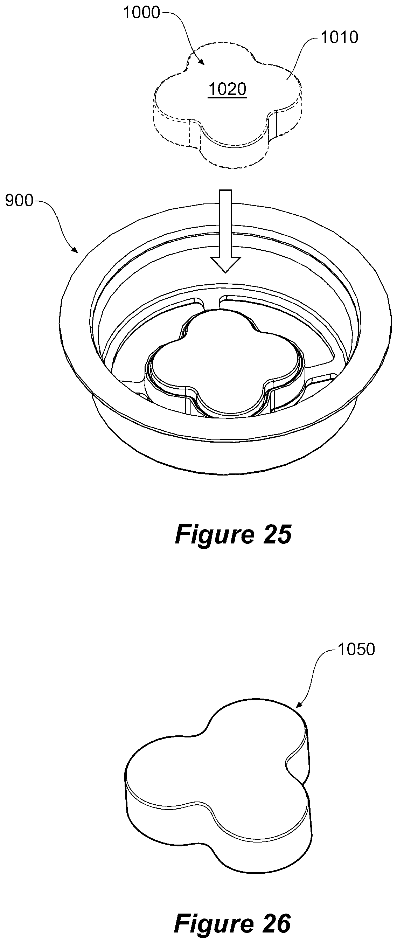

In this illustrative embodiment, cleaning material holding portion 950 is configured as a tablet holding region to receive a quatrefoil shaped tablet 1000 having in this example four semi-circular petals or lobes 1010 extending from a central region 1020 as best seen in Figure 25. Tablet holding region 950 includes a complementary shaped shelf region 951 that extends around the periphery of quatrefoil shaped tablet 1000 to hold tablet 1000. As would be appreciated, quatrefoil shaped tablet 1000 has an increased surface area when compared to that of a conventional shaped tablet which promotes dissolving of the tablet in use.

While in this illustrative embodiment, a quatrefoil shaped tablet is employed in other embodiments other shapes such as square, pentagonal, hexagonal, heptagonal, hexagonal etc may be used or alternatively non-regular shaped tablets optimised for the particular cleaning conditions may be adopted. In the embodiment depicted in Figure 26, tablet 1050 is a trefoil or shamrock shape comprising three lobes or petals.

The thickness of the tablet may be in the range including, but not limited to, 1.5 mm - 2.0 mm, 2.0 mm - 2.5 mm, 2.5 mm - 3.0 mm, 3.0 mm - 3.5 mm, 3.5 mm - 4.0 mm, 4.0 mm - 4.5 mm, 4.5 mm - 5.0 mm, 5.0 mm - 5.5 mm, 5.5 mm - 6.0 mm, 6.0 mm - 6.5 mm, 6.5 mm - 7.0 mm, 7.0 mm - 7.5 mm, 7.5 mm - 8.0 mm, 8.0 mm - 8.5 mm, 8.5 mm - 9.0 mm, 9.0 mm - 9.5 mm and 9.5 mm - 10.0 mm.

The outside circumscribed diameter of the tablet may be in the range including, but not limited to, 5 mm - 7.5 mm, 7.5 mm - 10 mm, 10 mm - 12.5 mm, 12.5 mm - 15 mm, 15 mm - 17.5 mm, 17.5 mm - 20 mm, 20 mm - 22.5 mm, 22.5 mm - 25 mm, 25 mm - 27.5 mm, 27.5 mm - 30 mm, 30 mm - 32.5 mm and 32.5 mm - 35 mm.

The volume of cleaning material may be in the range including, but not limited to, 250 mm³ - 500 mm³, 500 mm³ - 750 mm³, 750 mm³ - 1000 mm³, 1000 mm³ - 1250 mm³, 1250 mm³ - 1500 mm³, 1500 mm³ - 1750 mm³, 1750 mm³ - 2000 mm³, 2000 mm³ - 2250 mm³, 2250 mm³ - 2500 mm³, 2500 mm³ - 2750 mm³ and 2750 mm³ - 3000 mm³.

In one example, the tablet has a thickness of 6 mm and a circumscribed diameter or outside perimeter of 20 mm. For a quatrefoil shape such as tablet 1000 the resulting volume is 1324 mm³, while for a trefoil shape such as petal 1050, the equivalent volume is 1149 mm³. In this manner, the volume of the cleaning material may be modified by the selection of the tablet shape.

In other embodiments, the shape of the cleaning tablet may signify its strength or type so that a user when requiring a particular type of cleaning operation would select a cleaning device having a tablet holding region having a complementary size and shape to the required tablet.

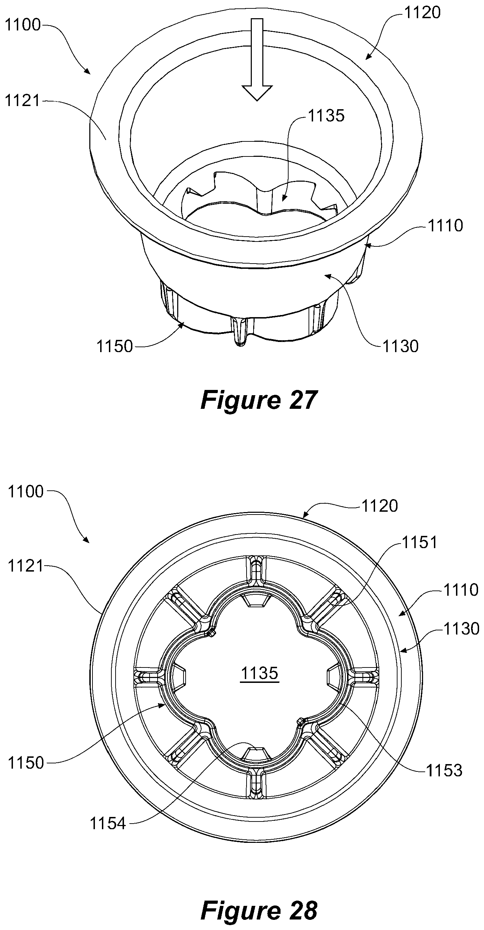

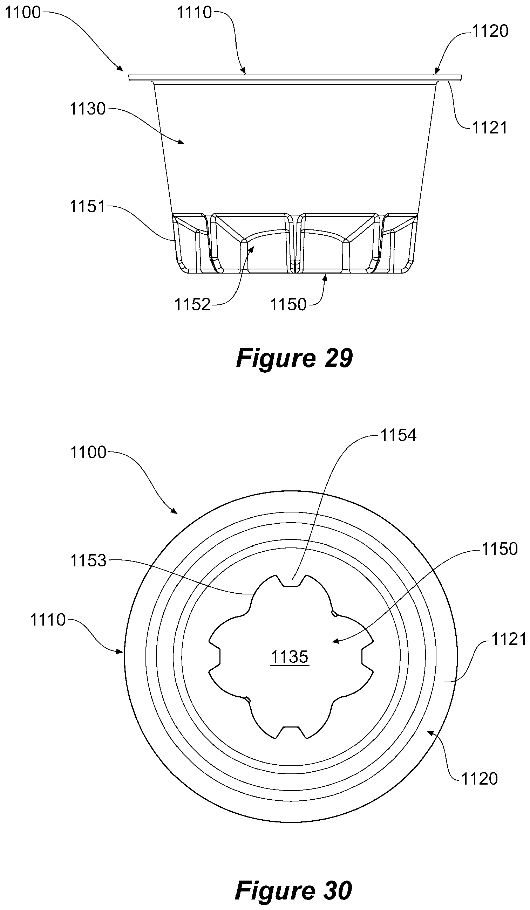

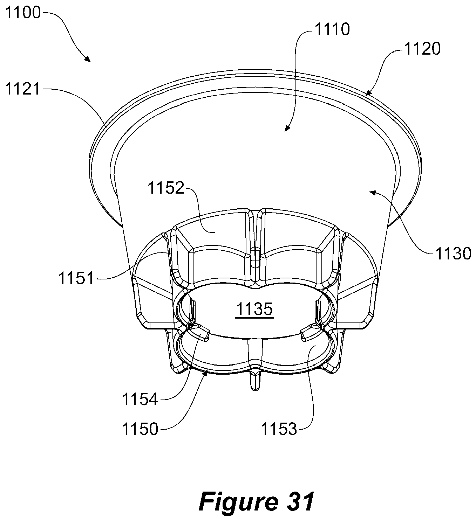

Referring now to Figures 27 to 31, there are shown various views of a cleaning device 1100 for cleaning a capsule based beverage system in accordance with a further illustrative embodiment. In this illustrative embodiment, cleaning device 1100 is for cleaning the brewing chamber and outlet arrangement of Nespresso™, DeLonghi™ and Breville™ capsule or pod systems, including but not limited to, Pixie, Lattissima, Essenza, Maestria, CitiZ and Le Cube machines.

Cleaning device 1100 includes a generally circularly shaped open-ended body portion 1110 that is configured to be located in the brewing chamber in the same sense that a capsule based beverage capsule would locate in the brewing chamber for making a beverage. Body portion 1110 includes a tablet holding region 1150 configured in this embodiment to accept and hold cleaning material in tablet form.

In this illustrative embodiment, body portion 1110 includes a locating portion 1120 that engages with the brewing chamber of the beverage system to prevent movement of body portion 1110 during the cleaning process. In this embodiment, locating portion 1120 is formed as circular rim or lip 1121 extending around the open-end of body portion 1110 that seats or locates against the opening of the brewing chamber in a similar manner as the rim of the corresponding beverage capsule would. Body portion 1110 further includes an insert portion 1130 that extends into the brewing chamber and which generally conforms to the shape of the brewing chamber that it extends into.

In this illustrative embodiment, insert portion 1130 is formed as cylindrical wall extending in use into the brewing chamber from locating portion 1120 terminating in a tablet holding region 1150 into which a cleaning tablet consisting of cleaning material may be loaded by press fitting a cleaning tablet. In this manner, the insert portion 1130 is formed generally as a tapered cylindrical body of similar size and configuration as compared to an equivalent capsule of the respective capsule based beverage system.

Tablet holding region 1150 is formed with a tablet conforming peripheral wall or skirt portion 1153 extending downwardly from the bottom of insert portion 1130 to receive the tablet. Wall portion 1153 is supported by outwardly radially extending external rib portions 1151 forming scalloped or recessed portions 1152 between each rib portion 1151. To facilitate the seating or locating of the cleaning tablet, tablet holding region 1160 incorporates four inwardly extending nibs or abutment portions 1154 spaced at right angles to each other.

Tablet holding region 1150 is arranged to be in fluid communication with body portion 1110 as a result of central aperture 1135 located at the bottom of insert portion 1130. In this illustrative embodiment, peripheral wall portion 1153 is of a quatrefoil shape to receive a corresponding quatrefoil shaped tablet. As would be appreciated, the peripheral wall portion 1153 may be sized and shaped to receive any correspondingly shaped tablet. In other embodiments, instead of central aperture 1135, insert portion 1130 may include a floor having a number of apertures to allow fluid to move from body portion 1110 to tablet holding region 1150.

In operation, in order to clean a capsule based beverage system, a user would first load cleaning device 1100 by, in this example, a tablet being press fitted into tablet holding region 1150. Nibs 1154 assist in preventing the tablet from being pushed through aperture 1135. Cleaning device 1100 is then inserted in the brewing chamber as per a standard capsule. The brewing chamber is then sealed in accordance with the standard operating procedure of the beverage dispenser and the beverage dispenser is operated to fill the brewing chamber with hot water under pressure via the inlet arrangement of the beverage dispenser. This hot water, delivered at typical temperatures of 90°C - 95°C and pressures ranging from 15 bar - 19 bar, flows through the body portion via aperture 1135 to interact with and dissolve the tablet to create a cleaning solution which is then forced out of the outlet arrangement at pressure in the process cleaning the brewing chamber and outlet arrangement.

The cleaning device may then be removed from the brewing chamber similarly to an equivalent used beverage capsule. Optionally, a user may elect to additionally flush the brewing chamber by operating the beverage dispenser without a capsule before preparing a beverage.

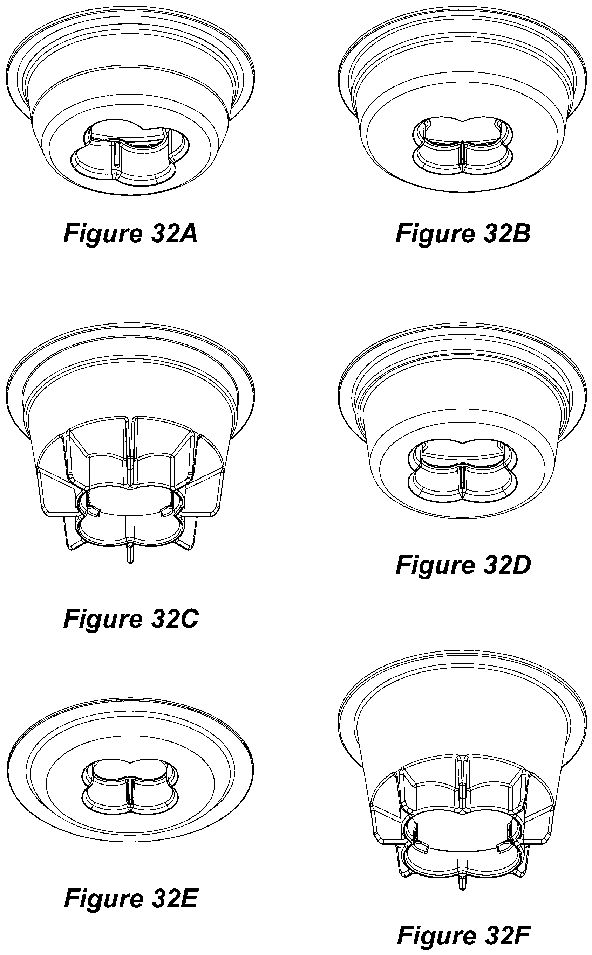

Figures 32A to 32F depict a range of cleaning devices according to illustrative embodiments configured for various capsule systems as described below:

Figure 32A is a cleaning device according to an illustrative embodiment directed to a Caffitaly™ capsule or pod system. Figure 32B is a cleaning device according to an illustrative embodiment directed to a Keurig™ capsule or pod system. Figure 32C is a cleaning device according to an illustrative embodiment directed to a K-Fee™ capsule or pod system. Figure 32D is a cleaning device according to an illustrative embodiment directed to a Lavazza a Modo Mio™ capsule or pod system. Figure 32E is a cleaning device according to an illustrative embodiment directed to a Nespresso Professional™ capsule or pod system. Figure 32F is a cleaning device according to an illustrative embodiment directed to a Espressotoria™ capsule or pod system.

In each of these example cleaning devices, the body portion is in fluid communication with the tablet holding region to allow water under pressure to flow through the body portion and through to the tablet holding region to dissolve the tablet. In the embodiments depicted in Figures 32A, 32B, 32D and 32E it can be seen that the respective tablet holding region extends internally of the respective body portion with an upwardly extending wall portion that is configured to receive the tablet and which forms an aperture between the tablet holding region and the body portion through which water flows.

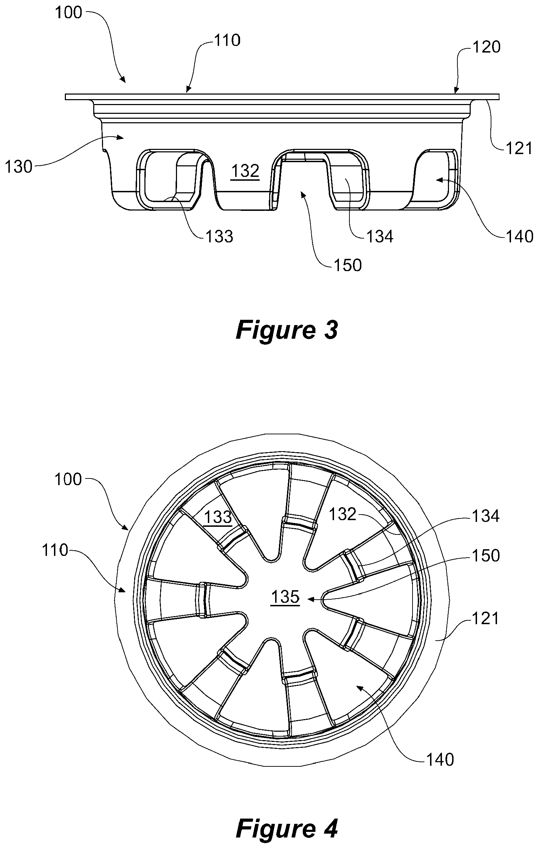

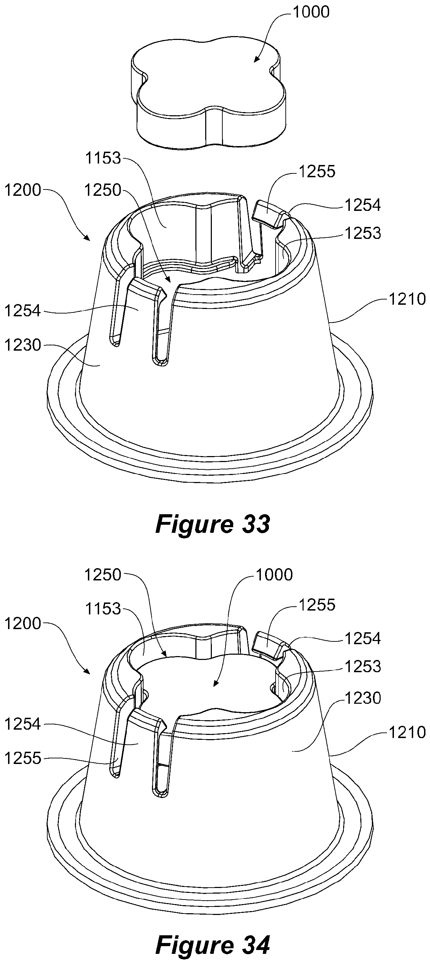

Referring now to Figures 33 and 34 there are shown perspective views of a cleaning device 1200 for cleaning the brewing chamber and outlet arrangement of Nespresso™, DeLonghi™ and Breville™ capsule or pod systems similar to that illustrated in Figures 27 to 31 in accordance with a further illustrative embodiment depicting the cleaning device 1200 in an unloaded state (Figure 33) and then loaded with a quatrefoil shaped cleaning tablet 1000 (Figure 4).

Cleaning device 1200 includes a generally circularly shaped open-ended body portion 1210 that is configured to be located in the brewing chamber in the same sense that a capsule based beverage capsule would locate in the brewing chamber for making a beverage. Body portion 1210 includes a tapered cylindrically shaped insert portion 1230 generally conforming to the shape of the brewing chamber that it extends into and which terminates in a tablet holding region 1250 into which a cleaning tablet consisting of cleaning material may be loaded by press fitting in this illustrative embodiment a quatrefoil shaped cleaning tablet 1000.

Tablet holding region 1250 in this illustrative embodiment includes two opposed tablet conforming peripheral wall or skirt portions 1253 that extend internally within the cylindrically shaped insert portion 1230 towards the open end of body portion 1210 of cleaning device 1200. Tablet holding region 1150 further includes a spring clip tablet retaining mechanism comprising in this embodiment of two opposed clip members or arms 1254 integrally formed in the wall of insert portion 1230 between skirt portions 1253 by forming respective slots 1255 either side of the clip members 1254 to allow the clip members 1254 to resiliently flex outwardly.

Clip members 1254 further include a terminating lip portion 1255 having a tapered outer surface that allows tablet 1000 to be pushed into tablet holding region, in the process urging outwardly each clip member 1254 which then spring back once the tablet 1000 is fully received within tablet holding region 1250, the lip portion 1255 then functioning to positively retain tablet 1000 in tablet holding region. In this illustrative embodiment, there are two skirt portions 1253 that extend substantially through 180° interposed with two clip members 1254. As would be appreciated, this arrangement could be varied to include more skirt portions 1253 with more interposed clip members 1254, eg four skirt portions 1253 that extend substantially through 90° interposed with four clip members 1254. Tablet holding region 1250 is arranged to be in fluid communication with body portion 1210 as a result of central aperture 1235 located at the bottom of insert portion 1230. As would be appreciated, and as described above, a cleaning device in accordance with the above described embodiments could be provided in both reusable and disposable versions.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

The reference to any prior art in this specification is not, and should not be taken as, an acknowledgement of any form of suggestion that such prior art forms part of the common general knowledge.

It will be appreciated by those skilled in the art that the disclosure is not restricted in its use to the particular application described. As an example, a cleaning device in accordance with the embodiments described above may be adapted for cleaning Keurig™ K-cup beverage dispensers. Neither is the present disclosure restricted in its preferred embodiment with regard to the particular elements and/or features described or depicted herein. While the above disclosure has been principally directed at coffee based beverage dispensers it will be understood that the cleaning device and method of the present disclosure will be equally applicably to other beverage type dispensers such as those directed to dispensing tea, soups, milk drinks, etc. It will be appreciated that the disclosure is not limited to the embodiment or embodiments disclosed, but is capable of numerous rearrangements, modifications and substitutions without departing from the scope of the invention as set forth and defined by the following claims.

## Claims

1. A cleaning device (100) for cleaning a capsule based beverage system, the capsule based beverage system including a brewing chamber having a predetermined size and shape for receiving a beverage capsule, the brewing chamber including an inlet arrangement operable to introduce water at pressure into the beverage capsule received in the chamber and an outlet arrangement to deliver beverage from the beverage capsule, the cleaning device comprising an open ended body portion (110) configured to be located in the brewing chamber, the body portion (110) including a cleaning material holding portion (150), the cleaning material holding portion (150) configured to hold the cleaning material (200) in a fixed relationship with respect to the body portion (110), wherein the body portion is configured to allow water under pressure originating from the inlet arrangement to flow through the body portion (110) and to interact with the cleaning material (200) to create a cleaning solution to clean the brewing chamber and outlet arrangement.

2. The cleaning device of claim 1, wherein the body portion (110) includes an insert portion (130) and a locating portion (120), the insert portion (130) extending into the brewing chamber and the locating portion configured (12) to engage with the brewing chamber to prevent movement of the body portion (110) when water under pressure interacts with the cleaning material.

3. The cleaning device of claim 2, wherein the insert portion (130) generally conforms to or with the shape of the brewing chamber.

4. The cleaning device of any one of the preceding claims, wherein the cleaning material holding portion (150) is configured to allow reloading of the cleaning material holding portion (150) after use.

5. The cleaning device of claim 4, wherein the cleaning material holding portion (150) is a tablet holding region in fluid communication with the body portion (110), the tablet holding region (150) adapted to receive the cleaning material (200) in tablet form.

6. The cleaning device of claim 5, wherein the body portion (110) is configured to allow water under pressure originating from the inlet arrangement to flow through to the tablet holding region (150) to dissolve the tablet (200) to create the cleaning solution.

7. The cleaning device of claim 6, wherein the water flows through the body portion (110) and through to the tablet holding portion (150) as a result of one or more apertures (140) located between the body portion (110) and the tablet holding portion (150).

8. The cleaning device of any one of claims 4 to 7, wherein the tablet holding region (150) is located generally internally of the body portion or alternatively generally externally of the body portion.

9. The cleaning device of any one claims 4 to 8, wherein the tablet holding region (150) is configured to hold the tablet (200) by press fitting the tablet (200) into the tablet holding region (150).

10. The cleaning device of claim 4, wherein the cleaning material holding portion (150) is a capsule holding region adapted to receive the cleaning material in capsule form.

11. The cleaning device of claim 10, wherein the capsule holding region is configured to hold the capsule by press fitting the capsule into the capsule holding region.

12. The cleaning device of claim 10 or 11, wherein the capsule holding region is located generally internally of the body portion or alternatively generally externally of the body portion.

13. The cleaning device of any one of the preceding claims, wherein the body portion (110) and the cleaning material holding portion (150) are integrally formed in a unitary moulding.

14. A method for cleaning a capsule based beverage system, the capsule based beverage system including a brewing chamber having a predetermined size and shape for receiving a beverage capsule, the brewing chamber including an inlet arrangement operable to introduce water at pressure into the beverage capsule received in the chamber and an outlet arrangement to deliver beverage from the beverage capsule, the method including:
inserting a cleaning device (100) configured to be received into the brewing chamber, the cleaning device comprising an open-ended body (110) that holds cleaning material (200) in a fixed relationship with respect to the body (110);
operating the beverage system to cause water at pressure to enter the brewing chamber by the inlet arrangement to form a cleaning solution; and
operating the beverage system to cause the cleaning solution to be forced out of the outlet arrangement.

15. The method of claim 14, wherein the cleaning device (100) is reusable and further including reloading cleaning material (200) into the cleaning device (100) before inserting the cleaning device (100) into the brewing chamber.

16. The method of claim 15, wherein the cleaning material (200) is in tablet form and reloading includes press fitting the tablet (200) into a tablet holding region (150) of the cleaning device (100).

17. The method of any one of claims 14 to 16, further including flushing the beverage system by operating the beverage system again following the initial operating of the beverage system to cause the cleaning solution to be forced out of the outlet arrangement prior to preparing a beverage.

## Patentansprüche

1. Reinigungsvorrichtung (100) zum Reinigen eines auf Kapseln basierenden Getränkesystems, wobei das auf Kapseln basierende Getränkesystem eine Brühkammer mit einer vorbestimmten Größe und Form zum Aufnehmen einer Getränkekapsel, wobei die Brühkammer eine Einlassanordnung aufweist, die zum Einleiten von unter Druck stehenden Wasser in die Getränkekapsel betrieben werden kann, die in der Kammer aufgenommen worden ist, und eine Auslassanordnung zum Abgeben eines Getränkes aus der Getränkekapsel aufweist, wobei die Reinigungsvorrichtung einen Körperabschnitt (110) mit einem offenen Ende aufweist, der auf eine solche Weise ausgestaltet ist, dass er in der Brühkammer angeordnet ist, wobei der Körperabschnitt (110) einen Reinigungsmaterial-Halteabschnitt (150) enthält, wobei der Reinigungsmaterial-Halteabschnitt (150) ausgestaltet ist, um das Reinigungsmaterial (200) in einer festen Beziehung in Bezug auf den Körperabschnitt (110) zu halten, wobei der Körperabschnitt ausgestaltet ist, um zuzulassen, dass das unter Druck stehende Wasser, das von der Einlassanordnung stammt, durch den Körperabschnitt (110) fließt und mit dem Reinigungsmaterial (200) wechselwirkt, um eine Reinigungslösung zum Reinigen der Brühkammer und der Auslassanordnung zu erzeugen.

2. Reinigungsvorrichtung nach Anspruch 1, wobei der Körperabschnitt (110) einen Einsatzabschnitt (130) und einen Lokalisierungsabschnitt (120) aufweist, wobei sich der Einsatzabschnitt (130) in die Brühkammer erstreckt und der Lokalisierungsabschnitt (12) ausgestaltet ist, um mit der Brühkammer in Eingriff zu kommen, um eine Bewegung des Körperteils (110) zu verhindern, wenn das unter Druck stehende Wasser mit dem Reinigungsmaterial in Wechselwirkung tritt.

3. Reinigungsvorrichtung nach Anspruch 2, wobei der Einsatzabschnitt (130) im Allgemeinen der Form der Brühkammer entspricht oder mit dieser übereinstimmt.

4. Reinigungsvorrichtung nach einem der vorhergehenden Ansprüche, wobei der Reinigungsmaterial-Halteabschnitt (150) ausgestaltet ist, um ein Nachladen des Reinigungsmaterial-Halteabschnitts (150) nach einem Gebrauch zu ermöglichen.

5. Reinigungsvorrichtung nach Anspruch 4, wobei der Reinigungsmaterial-Halteabschnitt (150) ein Tablettenhaltebereich in einer Fluidverbindung mit dem Körperabschnitt (110) ist, wobei der Tablettenhaltebereich (150) angepasst ist, um das Reinigungsmaterial (200) in Form von Tabletten aufzunehmen.

6. Reinigungsvorrichtung nach Anspruch 5, wobei der Körperabschnitt (110) ausgestaltet ist, um zuzulassen, dass das unter Druck stehende Wasser, das von der Einlassanordnung stammt, an den Tablettenhalteabschnitt (150) fließt, um die Tablette (200) aufzulösen, um die Reinigungslösung zu erzeugen.

7. Reinigungsvorrichtung nach Anspruch 6, wobei das Wasser infolge einer oder mehrerer Öffnungen (140), die zwischen dem Körperabschnitt (110) und dem Tablettenhalteabschnitt (150) angeordnet sind, durch den Körperabschnitt (110) fließt.

8. Reinigungsvorrichtung nach einem der Ansprüche 4 bis 7, wobei der Tablettenhalteabschnitt (150) im Allgemeinen innerhalb des Körperabschnitts oder im Allgemeinen außerhalb des Körperabschnitts angeordnet ist.

9. Reinigungsvorrichtung nach einem der Ansprüche 4 bis 8, wobei der Tablettenhalteabschnitt (150) ausgestaltet ist, um die Tablette (200) durch ein Einpressen der Tablette (200) in den Tablettenhalteabschnitt (150) zu halten.

10. Reinigungsvorrichtung nach Anspruch 4, wobei der Reinigungsmaterial-Halteabschnitt (150) ein Kapsel-Haltebereich ist, der angepasst ist, um das Reinigungsmaterial in einer Kapselform aufzunehmen.

11. Reinigungsvorrichtung nach Anspruch 10, wobei der Kapselhaltebereich ausgestaltet ist, um die Kapsel durch ein Einpressen der Kapsel in den Kapselhaltebereich zu halten.

12. Reinigungsvorrichtung nach Anspruch 10 oder 11, wobei der Kapselhaltebereich im Allgemeinen innerhalb des Körperabschnitts oder im Allgemeinen außerhalb des Körperabschnitts angeordnet ist.

13. Reinigungsvorrichtung nach einem der vorhergehenden Ansprüche, wobei der Körperabschnitt (110) und der Reinigungsmaterial-Halteabschnitt (150) einstückig in einem einheitlichen Formteil ausgebildet sind.

14. Verfahren zum Reinigen eines auf Kapseln basierenden Getränkesystems, wobei das auf Kapseln basierende Getränkesystem eine Brühkammer mit einer vorbestimmten Größe und Form zum Aufnehmen einer Getränkekapsel aufweist, wobei die Brühkammer eine Einlassanordnung, die dazu dient, ein unter Druck stehendes Wasser in die Getränkekapsel einzuführen, die in der Kammer aufgenommen worden ist, und eine Auslassanordnung aufweist, um ein Getränk aus der Getränkekapsel abzugeben, wobei das Verfahren umfasst:
ein Einsetzen einer Reinigungsvorrichtung (100), die ausgestaltet ist, um in die Brühkammer aufgenommen zu werden, wobei die Reinigungsvorrichtung einen Körper (110) mit einem offenen Ende aufweist, der das Reinigungsmaterial (200) in einer festen Beziehung in Bezug auf den Körper (110) hält,
ein Betreiben des Getränkesystems, um zu bewirken, dass das unter Druck stehende Wasser durch die Einlassanordnung in die Brühkammer eintritt, um eine Reinigungslösung zu bilden, und
ein Betreiben des Getränkesystems, um zu bewirken, dass die Reinigungslösung aus der Auslassanordnung gedrückt wird.

15. Verfahren nach Anspruch 14, wobei die Reinigungsvorrichtung (100) wiederverwendbar ist und das weiterhin ein Nachladen von Reinigungsmaterial (200) in die Reinigungsvorrichtung (100) vor dem Einsetzen der Reinigungsvorrichtung (100) in die Brühkammer umfasst.

16. Verfahren nach Anspruch 15, wobei das Reinigungsmaterial (200) in Tablettenform vorliegt und das Nachladen ein Einpressen der Tablette (200) in einen Tablettenhalteabschnitt (150) der Reinigungsvorrichtung (100) umfasst.

17. Verfahren nach einem der Ansprüche 14 bis 16, das ferner ein Spülen des Getränkesystems durch ein erneutes Betreiben des Getränkesystems nach dem anfänglichen Betreiben des Getränkesystems umfasst, um zu bewirken, dass die Reinigungslösung vor der Zubereitung eines Getränks aus der Auslassanordnung gedrückt worden ist.

## Revendications

1. Dispositif de nettoyage (100) pour nettoyer un système de boisson à base de capsules, le système de boisson à base de capsules incluant une chambre de percolation ayant une taille et une forme prédéterminées pour recevoir une capsule de boisson, la chambre de percolation incluant un dispositif d'entrée opérable pour introduire de l'eau sous pression dans la capsule de boisson reçue dans la chambre et un dispositif de sortie pour délivrer la boisson depuis la capsule de boisson, le dispositif de nettoyage comprenant une portion de corps à extrémité ouverte (110) configurée pour être disposée dans la chambre de percolation, la portion de corps (110) incluant une portion de maintien d'un matériau de nettoyage (150), la portion de maintien de matériau de nettoyage (150) étant configurée pour maintenir le matériau de nettoyage (200) dans une relation fixe par rapport à la portion de corps (110), dans lequel la portion de corps est configurée pour permettre à de l'eau sous pression venant du dispositif d'entrée de passer au travers de la portion de corps (110) et d'interagir avec le matériau de nettoyage (200) pour créer une solution de nettoyage pour nettoyer la chambre de percolation et le dispositif de sortie.

2. Dispositif de nettoyage selon la revendication 1, dans lequel la portion de corps (110) inclut une portion d'insertion (130) et une portion de positionnement (120), la portion d'insertion (130) s'étendant dans la chambre de percolation et la portion de positionnement étant configurée (12) pour s'engager avec la chambre de percolation pour empêcher le mouvement de la portion de corps (110) lorsque l'eau sous pression interagit avec le matériau de nettoyage.

3. Dispositif de nettoyage selon la revendication 2, dans lequel la portion d'insertion (130) est généralement conforme à ou avec la forme de la chambre de percolation.

4. Dispositif de nettoyage selon l'une quelconque des revendications précédentes, dans lequel la portion maintenant le matériau de nettoyage (150) est configurée pour permettre le rechargement de la portion de maintien de matériau de nettoyage (150) après utilisation.

5. Dispositif de nettoyage selon la revendication 4, dans lequel la portion de maintien de matériau de nettoyage (150) est une région de maintien de tablette en communication fluide avec la portion de corps (110), la région de maintien de tablette (150) étant adaptée pour recevoir le matériau de nettoyage (200) sous forme de tablette.

6. Dispositif de nettoyage selon la revendication 5, dans lequel la portion de corps (110) est configurée pour permettre à de l'eau sous pression venant du dispositif d'entrée de passer au travers de la région de maintien de tablette (150) pour dissoudre la tablette (200) pour créer la solution de nettoyage.

7. Dispositif de nettoyage selon la revendication 6, dans lequel l'eau passe au travers de la portion de corps (110) et au travers de la portion de maintien de tablette (150) du fait d'une ou de plusieurs ouvertures (140) situées entre la portion de corps (110) et la portion de maintien de tablette (150).

8. Dispositif de nettoyage selon l'une quelconque des revendications 4 à 7, dans lequel la région de maintien de tablette (150) est située de façon générale à l'intérieur de la portion de corps ou autrement de façon générale à l'extérieur de la portion de corps.

9. Dispositif de nettoyage selon l'une quelconque des revendications 4 à 8, dans lequel la région de maintien de tablette (150) est configurée pour maintenir la tablette (200) en installant par pressage la tablette (200) dans la région de maintien de tablette (150) .

10. Dispositif de nettoyage selon la revendication 4, dans lequel la portion de maintien de matériau de nettoyage (150) est une région de maintien de capsule adaptée pour recevoir le matériau de nettoyage sous forme de capsule.

11. Dispositif de nettoyage selon la revendication 10, dans lequel la région de maintien de capsule est configurée pour maintenir la capsule en installant par pressage la capsule dans la région de maintien de capsule.

12. Dispositif de nettoyage selon la revendication 10 ou 11, dans lequel la région de maintien de capsule est positionnée de façon générale à l'intérieur de la portion de corps ou autrement de façon générale à l'extérieur de la portion de corps.

13. Dispositif de nettoyage selon l'une quelconque des revendications précédentes, dans lequel la région de corps (110) et la portion de maintien de matériau de nettoyage (150) sont formées de façon intégrale dans un moulage unitaire.

14. Procédé pour nettoyer un système de boisson à base de capsules, le système de boisson à base de capsules incluant une chambre de percolation ayant une taille et une forme prédéterminées pour recevoir une capsule de percolation, la chambre de percolation incluant un dispositif d'entrée opérable pour introduire de l'eau sous pression dans la capsule de percolation reçue dans la chambre et un dispositif de sortie pour délivrer la boisson depuis la capsule de percolation, le procédé incluant les étapes consistant à :
insérer un dispositif de nettoyage (100) configuré pour être reçu dans la chambre de percolation, le dispositif de nettoyage comprenant un corps à extrémité ouverte (110) qui maintient un matériau de nettoyage (200) dans une relation fixe par rapport au corps (110) ;
faire fonctionner le système de boisson pour faire entrer l'eau sous pression dans la chambre de percolation par le dispositif d'entrée pour former une solution de nettoyage ; et
faire fonctionner le système de boisson pour faire expulser la solution de nettoyage du dispositif de sortie.

15. Procédé selon la revendication 14, dans lequel le dispositif de nettoyage (100) est réutilisable et inclut en outre le rechargement du matériau de nettoyage (200) dans le dispositif de nettoyage (100) avant d'insérer le dispositif de nettoyage (100) dans la chambre de percolation ;

16. Procédé selon la revendication 15, dans lequel le matériau de nettoyage (200) est sous forme de tablette et où le rechargement inclut l'insertion par pressage de la tablette (200) dans une région de maintien de tablette (150) du dispositif de nettoyage (100).

17. Procédé selon l'une quelconque des revendications 14 à 16, incluant en outre le rinçage du système de boisson en opérant à nouveau le système de boisson après le fonctionnement initial du système de boisson pour faire expulser la solution de nettoyage du dispositif de sortie avant la préparation d'une boisson.
